(19) **Europäisches Patentamt / European Patent Office / Office européen des brevets**

(11) **EP 4 635 744 A2**

(12) # EUROPÄISCHE PATENTANMELDUNG

(43) Veröffentlichungstag:
22.10.2025 Patentblatt 2025/43

(21) Anmeldenummer: 25199891.0

(22) Anmeldetag: 11.12.2017

(51) Internationale Patentklassifikation (IPC):
*B44C 5/04* (2006.01)

(52) Gemeinsame Patentklassifikation (CPC):
**B41M 5/0005; B44C 1/24; B44C 5/0469**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(62) Dokumentnummer(n) der früheren Anmeldung(en) nach Art. 76 EPÜ:
**22158023.6 / 4 019 263**
**17206407.3 / 3 495 153**

(71) Anmelder: **Flooring Technologies Ltd.**
**Kalkara SCM1001 (MT)**

(72) Erfinder:
• **KALWA, Norbert**
**32805 Horn-Bad Meinberg (DE)**

• **HASCH, Joachim**
**10317 Berlin (DE)**
• **STIEWE, Bernd**
**33039 Nieheim (DE)**

(74) Vertreter: **Maikowski & Ninnemann**
**Patentanwälte Partnerschaft mbB**
**Postfach 15 09 20**
**10671 Berlin (DE)**

Bemerkungen:
Diese Anmeldung ist am 03-09-2025 als Teilanmeldung zu der unter INID-Code 62 erwähnten Anmeldung eingereicht worden.

(54) ## VERFAHREN UND VORRICHTUNG ZUR HERSTELLUNG VON SCHICHTSTOFFEN MIT SYNCHRONPORE

(57) Die Erfindung betrifft ein Verfahren zur Erzeugung von Schichtstoffen mit Synchronpore, umfassend die Schritte:

a) Erzeugung eines Schichtstoffs, umfassend die Schritte

i. Bedrucken eines Trägermaterials, vorzugsweise eines Dekorpapiers, mittels Digitaldruck und Speichern der Druck- und/oder Positionsdaten des Druckdekors;

ii. Trocknen des bedruckten Trägermaterials;

iii. Aufbringen und Trocknen einer Imprägnierung auf das bedruckte Trägermaterial;

iv. Erzeugen eines Schichtstoffs, umfassend das Pressen des bedruckten und imprägnierten Trägermaterials zusammen mit imprägnierten Kernlagen und ggf. einem Overlay und ggf. einer Schutzschicht unter Verwendung eines Strukturgebers;

b) Messen der Dimensionen des Strukturgebers;

c) Messen der Dimensionen des Trägermaterials;

d) Ermittlung von Abweichungen der Dimensionen des Trägermaterials von den Dimensionen des Strukturgebers;

e) Berechnen mindestens eines Korrekturfaktors K;

f) Übermittlung des mindestens einen Korrekturfaktors K an den Digitaldrucker;

g) Anpassen der Dimensionen des Dekors beim Digitaldruck mit Hilfe des mindestens einen Korrekturfaktors K.

Die Erfindung stellt weiterhin eine Vorrichtung zur Durchführung dieses Verfahrens bereit. In weiteren Aspekten betrifft die Erfindung Schichtstoffe, die mit diesem Verfahren herstellbar sind, sowie Holzwerkstoffplatten, die mit den nach dem erfindungsgemäßen Verfahren hergestellten Schichtstoffen ausgerüstet sind.

EP 4 635 744 A2

## Beschreibung

### Gebiet der Erfindung

Die Erfindung betrifft ein Verfahren, insbesondere zur kontinuierlichen Erzeugung von Schichtstoffen mit Synchronpore. Die Erfindung stellt weiterhin eine Vorrichtung zur Durchführung dieses Verfahrens bereit. In weiteren Aspekten betrifft die Erfindung Schichtstoffe, die mit diesem Verfahren herstellbar sind, sowie Holzwerkstoffplatten, die mit den nach dem erfindungsgemäßen Verfahren hergestellten Schichtstoffen beklebt/beschichtet sind.

### Hintergrund der Erfindung

Bei der Herstellung von Produkten mit dekorativen Oberflächen in den verschiedensten Anwendungsbereichen (Möbel, Bodenbeläge, Gebrauchsgegenstände, Wand- und Deckenverkleidungen usw.) ist es stets das Bestreben des Designers bzw. des Herstellers, sich möglichst nahe an die nachzubildende Vorlage anzunähern. Bei den Vorlagen handelt es dabei meist Muster, die aus der Natur stammen. Diese können Hölzer, Steine oder andere in der Natur vorkommende Produkte sein. Dabei genügt es heute nicht mehr nur, das Dekor nachzustellen, was durch Digitalisierung und Druck mit einem Digitaldrucker auf die verschiedensten Substrate problemlos möglich ist, vielmehr wird auch gefordert, dass das Dekor mit einer der natürlichen Vorlage entsprechenden Oberfläche versehen ist. Als heute schon fast allgemein gültiges Qualitätsniveau wird dabei registered embossing (Übereinstimmung von Struktur und Dekor) gefordert. Dies lässt sich häufig aber nicht ohne weiteres realisieren, da in vielen Fällen die dekorativen Oberflächen bedruckte Papiere enthalten und diese im Rahmen der verschiedenen Produktionsschritte Dimensionsänderungen durchlaufen.

Zur Erzeugung des gewünschten Qualitätsniveaus (registered embossing) müssen bei diesen Prozessen das bedruckte und imprägnierte Dekorpapier mit dem Strukturblech, Strukturgeber oder dem Strukturband möglichst gut zur Deckung gebracht werden. Dabei ist der Versuch, das imprägnierte Dekorpapier vor einer kontinuierlichen Presse (CPL-Presse) zu vermitteln nicht zielführend, da damit lediglich das Problem des Breitenwachstums verringert, aber nicht vollständig überwunden werden kann. Auch die derzeit häufig angewendete Technologie mit aufgedruckten Schnittmarkierungen im Randbereich liefert nicht die benötigte Präzision, da diese nur für die Korrektur von Längenänderungen herangezogen werden kann. Hier sind Schwankungen von bis zu 10 mm in der Genauigkeit der Übereinstimmung von Druckdekor und Strukturierung zu beobachten.

Ein herkömmliches Herstellungsverfahren für Schichtstoffe lässt sich wie folgt beschreiben: Zunächst wird auf ein Druckbasispapier, das eine gewisse Feuchte besitzt, das gewünschte Dekor im Digitaldruckdruck aufgebracht. Die dabei verwendeten wässrigen Farben führen zu in Kombination mit der Bahnspannung in der Druckmaschine zu einer Dehnung des Papiers sowohl in der Länge als auch in der Breite. Daran schließt sich eine Trocknung der Farben durch warme Luft, IR-Strahler usw. an, was unter Umständen bis zum Austrocknen des Papiers und einem damit verbundenen Schrumpfen des bedruckten Papiers führt. Im nächsten Produktionsschritt wird das Papier typischerweise in einer Imprägnierlinie mit einem wässrigen Kunstharz (z. B.: Melaminharz) imprägniert. Auch bei diesem Produktionsschritt tritt zunächst durch das Quellen und die Bahnspannung eine Dehnung des bedruckten Papiers auf. Danach wird das Papier im Trockenkanal auf eine Verarbeitungsfeuchte von beispielsweise ca. 6 Gew% zurückgetrocknet, wodurch sich die Dimensionsänderung in der Breite auf beispielsweise ca. 1,5 % und in der Länge auf beispielsweise ca. 0,5 % reduziert. Bei einer 2 m breiten Papierbahn resultiert daraus ein Wachstum von beispielsweise ca. 30 mm in der Breite und von beispielsweise ca. 5 mm pro laufenden Meter in der Länge. Das bedruckte, imprägnierte und getrocknete Papier wird anschließend entweder aufgerollt oder zu Bogen aufgetrennt. Die Rollenware wird dann zusammen mit imprägnierten Kernlagen und gegebenenfalls einem Overlay, auf einer kontinuierlichen Presse (CPL-Presse) verarbeitet, wobei als Strukturgeber entweder ein strukturiertes Band oder Strukturgeber auf Basis von lackierten Papieren fungieren. Alternativ wird die Bogenware wird ebenfalls mit imprägnierten Kernlagen, ebenfalls gegebenenfalls mit einem Overlay, strukturierten Pressblechen oder Strukturgebern in einer Mehretagenpresse verarbeitet. In beiden Prozessen wird bei hohen Drücken und hohen Temperaturen ein Aufschmelzen und Vernetzen der Kunstharze und damit der einzelnen imprägnierten Papiere erreicht.

Im Stand der Technik gibt es verschiedene Ansätze, dem gewünschten Qualitätsniveau gerecht zu werden. So beschreibt die DE 10 2004 054 765 A1 ein Verfahren zur Herstellung eines dekorativen Laminats in einem diskontinuierlichen Prozess, wobei ein Dekorblatt kameragesteuert mit einer Basisschicht und einer Pressplatte in Übereinstimmung gebracht und platziert. Nach Laminierung in einer Laminat-Presse wird ein Vergleichs-Kameraarray durchgeführt, der die hergestellte Verbundanordnung zwischen dem Dekorblatt und der hergestellten Struktur nachweist und die nachgewiesenen Verbundanordnungsdaten von einem Computer als Steuerungsdaten für die Platzierung des Dekorblattes zur Verfügung stellt. Dimensionsänderungen des Dekorblatts durch zuvor erfolgte Prozessschritte, wie Bedrucken, Trocknen, Imprägnieren, erneut Trocknen, werden nicht berücksichtigt. Die kameragesteuerte Platzierung des Dekorblattes kann also lediglich zu einer Vermittlung der Abweichungen zwischen Druckdekor und Strukturierung führen. Eine Übereinstimmung von Druckdekor und Strukturierung im Fertigprodukt kann mit dieser Maßnahme nicht sichergestellt werden.

Die WO 97/31775 beschreibt ein kontinuierliches Verfahren zur Herstellung eines dekorativen Laminats, bei dem eine Strukturgebermatrix mit entsprechenden Dekorabschnitten des Dekorpapiers vor dem Pressen in Übereinstimmung gebracht wird. Die Strukturgebermatrix kann verschiedene Positionierungsmittel enthalten. Die Geschwindigkeit der Strukturgebermatrix und/oder der Dekorpapierbahn wird kontinuierlich mittels Sensoren, wie mechanischen Transmittern, Scannern, Fotozellen, CCD-Kameras, pneumatische Sensoren oder dergleichen, und der Positionierungsmittel gesteuert, um eine möglichst genaue Übereinstimmung zwischen der Dekor- und Oberflächenstruktur zu erhalten. Jedoch werden auch bei dem hier beschriebenen Verfahren Dimensionsänderungen des Dekorblatts durch die bereits genannten zuvor erfolgten Prozessschritte, und damit Abweichungen der Dimensionen der Dekorpapierbahn von den Dimensionen des Strukturgebers, nicht berücksichtigt. Dies ist in diesem Falle besonders nachteilig bei Längenänderungen der Dekorpapierbahn, die mit der Länge der Dekorpapierbahn kumulieren.

**Beschreibung der Erfindung**

Die herkömmlichen Verfahren zur Herstellung von Schichtstoffen berücksichtigen Dimensionsänderungen des Trägermaterials während der der einzelnen Herstellungsschritte in der Regel nicht. Dadurch kommt es zu Qualitätsmängeln bei der Erzielung einer Synchronpore (registered embossing), was letztlich zu nicht dem gewünschten Standard entsprechenden Produkten bzw. im ungünstigsten Fall zu Materialverlusten und Ausschuss führt.

Die Aufgabe der Erfindung bestand deshalb darin, ein Verfahren zur Herstellung von Schichtstoffen bereitzustellen, die dem erforderlichen Qualitätsniveau gerecht werden, d.h. eine Synchronpore aufweisen, und mit dem die Nachteile der aus dem Stand der Technik bekannten Verfahren überwunden werden können. Im Einzelnen besteht die Aufgabe, die digitalen Daten des gedruckten Dekors für die folgenden Prozessschritte zur Verfügung gestellt werden. Damit soll ermöglicht werden, auch kontinuierlich produzierte Schichtstoffe mit Synchronpore herzustellen. Als Hilfsmittel für die Lösung des Problems sollen dabei die elektronischen Daten des Digitaldrucks dienen, die durch Abgleich mit Hilfe von Sensoren die Positionsänderungen der Dekordetails auf der Warenbahn während der verschiedenen Produktionsschritte detektieren und ein regelndes Eingreifen möglich machen.

Die Aufgabe der Erfindung wird gelöst durch Bereitstellung eines Herstellungsverfahrens für Schichtstoffe, das zusammengefasst folgendermaßen beschrieben werden kann:

Eine Möglichkeit, die beschriebenen Probleme herkömmlicher Herstellungsverfahren zu lösen, besteht darin, über den gesamten Prozess Dekordaten zu speichern und diese falls nötig durch Prozessveränderungen zu beeinflussen. Bei der Bereitstellung von digitalen Daten für die Erzeugung von dekorativen Oberflächen für unterschiedliche Produkte wie Möbel, Fußboden, Paneele, Wandverkleidungen, Fassaden und anderer Bedarfsgegenstände werden zunächst Vorlagen bzw. Motive aus verschiedenster Herkunft bereitgestellt. Diese können je nach Bedarf aus unterschiedlichen Quellen stammen. So können zum einen natürliche Produkte wie Holz oder Stein genutzt werden oder zum anderen können auch andere Vorlagen verwendet werden, die durch weitere Drucktechniken wie dem Tiefdruck, Siebdruck oder auch mittels manueller Herstellung erzeugt wurden. Diese Vorlagen werden anschließend unter Verwendung eines Scanners digitalisiert, wobei die heutzutage zum Einsatz kommenden Scanner in der Lage sind, großformatige Vorlagen in einem Scan zu digitalisieren.

Zur Weiterverarbeitung der digitalen Daten wird erfindungsgemäß vorzugsweise der Digitaldruck genutzt. Bereits beim Bedrucken des Dekorpapiers liegen Informationen über den Druck in Bezug auf die Breite und Länge des Papieres vor. Diese Informationen können nach jedem Verarbeitungsschritt mit den Ursprungsdaten abgeglichen werden. Damit können zum einen sofort Prozessparameter geändert werden, wenn sich Abweichungen im Prozess zeigen. Zum anderen besteht auch die Möglichkeit, Produktchargen, die nicht den Vorgaben entsprechen, anderweitig zu nutzen. Zudem besteht beim Digitaldruck anders als beim Tiefdruck die Möglichkeit, durch Softwaretools den Druck an das Dehnungs- bzw Schrumpfungsverhalten des Papieres anzupassen.

Das erfindungsgemäße Verfahren beruht also darauf, dass die gesamten Dekordaten mit dem Trägermaterial im Prozess verfügbar gehalten werden. Über Sensoren erfolgen auf allen Fertigungsstufen Abgleiche zu den davor bzw. dahinter liegenden Prozessschritten. Im ersten Schritt wird auf das Trägermaterial, beispielsweise ein Druckbasispapier, ein Dekordruck aufgebracht. Dabei wird, beispielsweise durch integrierte Längen- und Breitenmesser die Position des Druckes auf dem Papier erfasst. Im nächsten Produktionsschritt (Imprägierung des Trägermaterials) wird nach der Trocknung die Veränderung der Dimensionen des Trägermaterials in Länge und Breite ermittelt und entsprechend einem vorgegebenen Normwert abgeglichen. Dies erfolgt vorzugsweise an einer Stelle, an der besonders exakte Messungen möglich sind, wie beispielsweise an Kühlwalzen. Dort ist sowohl die Längen- als auch Breitenmessung sehr exakt möglich, da das imprägnierte Trägermaterial vollflächig an die Kühlwalzen angepresst ist. Damit wird das häufig existierende Problem von welligen Trägermaterialien, die eine exakte Längen- und Breitenmessung erschweren, umgangen. Bei Abweichungen kann eine Veränderung der Prozessparameter, wie Trocknung, Bahnspannung, Produktionsgeschwindigkeit usw. erfolgen. Falls diese Prozessänderungen kein qualitätsgerechtes Ergebnis liefern, kann für zukünftige Aufträge die Druckbreite angepasst werden.

Vorteilhaft ist, wenn der Digitaldrucker bzw. eine Druckstraße, die den Digitaldrucker enthält, in eine entsprechende Vorrichtung zur Herstellung von Schichtstoffen integriert ist. Der Digitaldrucker ist dann vorzugsweise vor dem Imprägnierkanal angeordnet. Die Dimensionen des Druckdekors können dann unmittelbar, während des vorzugsweise kontinuierlichen Prozesses, in Länge und/oder Breite komprimiert (im Falle einer Dehnung des Trägermaterials) und/oder expandiert (im Falle einer Schrumpfung des Trägermaterials) werden. Nicht qualitätsgerechte Produkte werden im Rahmen der Prozessüberwachung erkannt und können für nicht-registered embossing Aufträge genutzt werden. Damit können prinzipiell alle Dekorpapiere verarbeitet werden. Allerdings muss jeweils die Anpassung des Druckes an die Struktur des Strukturgebers oder des Strukturbandes erfolgen. Nach dem Imprägnieren werden die Dekorpapiere aufgerollt. An der CPL-Presse, wo die imprägnierten Trägermaterialien bei hohem Druck und hohen Temperaturen miteinander laminiert werden, werden die Daten, die zusammen mit der Rolle weitergeleitet werden, zur Positionierung des Dekors zum Strukturgeber oder zum Strukturband genutzt. Dabei ist wiederum zu berücksichtigen, dass bei der Verwendung eines Strukturgebers auf Papierbasis durch das Austrocknen des Strukturgebers ein Schrumpfen des Trägermaterials erfolgt, wohingegen bei der Verwendung eines Pressbleches eine Ausdehnung erfolgt. Damit ist bei Änderung der Auftragsgröße auch die Änderung des strukturgebenden Elementes möglich, ohne dass, mit Qualitätsmängeln zu rechnen ist. Dies kann häufig ein Problem bei der Neueinführung von Dekoren/Dekorfamilien mit gleicher Struktur sein. Dort beginnt man, da nicht klar ist, wie sich das Dekor/ die Dekorfamilie mengenmäßig entwickeln wird, üblicherweise mit einem Strukturgeber auf Papierbasis. Wenn sich dann das Dekor/die Dekorfamilie zu einem Markterfolg entwickelt, wird üblicherweise aus Kostengrünen auf ein Strukturband gewechselt, was genau zu den oben geschilderten Problemen führt.

Durch den permanenten Abgleich der Dekordaten mit dem Strukturgeber oder dem Strukturband kann neben den im imprägnierten Trägermaterial vorhandene Schwankungen auch das Traversieren der des bahnförmigen Trägermaterials während des Herstellungsprozesses korrigiert werden. Nach dem Durchlaufen der CPL-Presse können die Laminate dann gewickelt werden oder bereits zu Zuschnitten aufgeteilt werden. Auch dabei können die gespeicherten Daten, die um das Schrumpfen des Laminates in der kontinuierlichen Presse (CPL-Presse) aktualisiert worden sind.

Die Positionsdaten des Druckdekors können auch für spätere Veredelungsschritte intern oder extern verwendet werden. Dies ist besonders für Produkte wichtig, bei denen es auf exakte Schnittbilder ankommt, wie beispielsweise Möbelfronten, Bodenbelägen und Türblätter.

Das erfindungsgemäße Verfahren ist besonders vorteilhaft, da durch Qualitätsverbesserung bei der Herstellung der Synchronpore wesentlich weniger Ausschuss produziert wird und die Weiterverarbeitung der Schichtstoffe erleichtert bzw. verbessert wird.

In einer bevorzugten Ausführungsform der Erfindung werden die Dimensionen des mittels Digitaldruck auf einem Trägermaterial erzeugten Druckdekors so angepasst, dass die Dimensionsänderungen des Druckdekors während der oben genannten Verarbeitungsschritte berücksichtigt werden. Dazu werden zunächst die Dimensionen des Strukturgebers und des Trägermaterials vor Ausführung des Digitaldrucks gemessen. Abweichungen der Dimensionen des Trägermaterials von den Dimensionen des Strukturgebers werden ermittelt und zur Berechnung mindestens eines Korrekturfaktors K benutzt. Dieser mindestens eine Korrekturfaktor K wird an den Digitaldrucker übermittelt und zur Anpassung der Dimensionen des Druckdekors beim Digitaldruck verwendet.

Als Trägermaterial für das Herstellungsverfahren von Schichtstoffen gemäß der Erfindung eignet sich jedes Material, das mit einem Digitaldrucker und in der Regel wässrigen Tinten bedruckt werden kann und vorzugsweise nach dem Digitaldruck und Trocknung des Druckdekors aufgerollt werden kann. Vorzugsweise wird als Trägermaterial Druckerpapier mit einer Grammatur im Bereich von 60-80 g/m$^2$ verwendet. Für qualitativ sehr hochwertige Erzeugnisse kann auch Druckerpapier mit einer Grammatur im Bereich von 100-110 g/m$^2$ zum Einsatz kommen.

In einer besonders bevorzugten Ausführungsform stellt die Erfindung ein Verfahren zur Erzeugung von Schichtstoffen mit Synchronpore bereit, umfassend die Schritte:

a) Erzeugung eines Schichtstoffs, umfassend die Schritte

i. Bedrucken eines Trägermaterials, vorzugsweise eines Dekorpapiers, mittels Digitaldruck und Speichern der Druck- und/oder Positionsdaten des Druckdekors;
ii. Trocknen des bedruckten Trägermaterials;
iii. Aufbringen und Trocknen einer Imprägnierung auf das bedruckte Trägermaterial;
iv. Erzeugen eines Schichtstoffs, umfassend das Pressen des bedruckten und imprägnierten Trägermaterials zusammen mit imprägnierten Kernlagen und ggf. einem Overlay und ggf. einer Schutzschicht unter Verwendung eines Strukturgebers;

b) Messen der Dimensionen des Strukturgebers;
c) Messen der Dimensionen des Trägermaterials;
d) Ermittlung von Abweichungen der Dimensionen des Trägermaterials von den Dimensionen des Strukturgebers;
e) Berechnen mindestens eines Korrekturfaktors K;
f) Übermittlung des mindestens einen Korrekturfaktors K an den Digitaldrucker;

g) Anpassen der Dimensionen des Dekors beim Digitaldruck mit Hilfe des mindestens einen Korrekturfaktors K.

In einer weiteren Ausführungsform der Erfindung ist der zu ermittelnde Korrekturfaktor K spezifisch für das als Ausgangsstoff verwendete Druckerpapier. Mithin wird erfindungsgemäß darauf geachtet, dass möglichst immer Druckerpapier mit gleicher Spezifikation vom gleichen Hersteller als Ausgangsstoff eingesetzt wird, da Druckerpapiere verschiedener Hersteller unterschiedliche Zusammensetzungen aufweisen können, die zu unterschiedlichen Dimensionsänderungen des Druckerpapier beim Bedrucken und dem nachfolgenden Trocknen des Dekordrucks führen können. Der Korrekturfaktor K kann auch abhängig sein von der Auftragsmenge der wässrigen Druckertinte beim Digitaldruck. Die Dimensionsänderungen des Druckerpapiers sind umso größer, je größer die Menge der aufgetragenen wässrigen Tinte ist. In einer weiteren Ausführungsform der Erfindung ist der Korrekturfaktor K deshalb auch spezifisch für ein bestimmtes Druckdekor.

Der Schichtstoff, der mit dem erfindungsgemäßen Verfahren hergestellt werden soll, ist vorzugsweise ein Laminat, besonders bevorzugt ein Hochdrucklaminat (sogenanntes HPL, "high pressure laminate"). Diese Laminate bestehen aus mehreren Schichten Papier mit einer Harzbeschichtung, die unter hohem Druck zusammengefügt wurden. Es werden mehrere mit Melamin- und Phenol-Harz getränkte Papiere unter Druck und Temperatur miteinander und gegebenenfalls mit einer Deckschicht verpresst.

Der Strukturgeber ist entweder ein Strukturgeber auf Papierbasis, ein Strukturband oder ein Pressblech. Für die kontinuierliche Herstellung des Schichtstoffs eignen sich Strukturgeber auf Papierbasis. Bei größeren Losgrößen kommen auch Strukturbänder einer kontinuierlichen Presse (CPL-Presse) zum Einsatz. Pressbleche sind Bestandteile von Mehretagenpressen, die für die Herstellung von Schichtstoffen in kleineren Formaten im diskontinuierlichen Verfahren eingesetzt werden.

Es gibt verschiedene Möglichkeiten, die Dimensionen des Strukturgebers und des Trägermaterials zu messen. In einer Ausführungsform erfindungsgemäßen Verfahrens werden die Dimensionen des Strukturgebers und des Trägermaterials anhand des Längenrapports und/oder des Breitenrapports gemessen. Zusätzlich oder alternativ können die Dimensionen des Strukturgebers und des Trägermaterials mit Hilfe von Positionsmarken gemessen werden, die auf dem Strukturgeber oder auf dem Druckdekor angebracht sind. In einer bevorzugten Ausführungsform des erfindungsgemäßen Verfahrens sind diese Positionsmarken ausgewählt aus einer Kontrollmarke auf dem Druckdekor und/oder dem Strukturgeber, einer Rastermarke auf dem Druckdekor und/oder dem Strukturgeber und einem sogenannten Cutblock. Die Kontrollmarken und die Rastermarken befinden sich üblicherweise im Rapport. Der Cutblock befindet sich in der Regel auf der Rückseite des Schichtstoffs und dient der korrekten Positionierung einer Schneideinrichtung, beispielsweise eines Clippers, für den Fall, dass die kontinuierlich produzierten Schichtstoffe nach der Herstellung in kleinere Formate aufgeteilt werden sollen. Es hat sich als besonders vorteilhaft erwiesen, wenn die Dimensionen des Strukturgebers nach mindestens einmaligem Durchlaufen des Strukturgebers durch eine aufgeheizte Presse (beispielsweise bei 200°C) gemessen werden, da der Strukturgeber beim Erwärmen einer Dimensionsänderung unterliegt und erst bei Erreichen einer Betriebstemperatur die Prozess-typischen und konstanten Dimensionen erreicht, die dann der Ermittlung des Korrekturfaktors K zu Grunde gelegt werden sollen.

Dimensionsänderungen des Strukturgebers und des Trägermaterials können während des Prozesses sowohl in der Länge als auch in der Breite auftreten. Es ist deshalb bevorzugt, wenn in Schritt d) des erfindungsgemäßen Verfahrens die Abweichungen in der Länge und/oder der Breite des Trägermaterials von der Länge und/oder der Breite des Strukturgebers ermittelt werden.

Wie oben beschrieben, können Abweichungen der Dimensionen des Trägermaterials auf allen Fertigungsstufen der Verfahrensschritte a) i. bis a) iv auftreten. In einer besonders bevorzugten Ausführungsform der Erfindung werden deshalb auf allen Fertigungsstufen der Verfahrensschritte a) i. bis a) iv Abweichungen in der Länge und/oder der Breite des Trägermaterials von der Länge und/oder der Breite des Strukturgebers gemäß Verfahrensschritt d) ermittelt. Diese Vorgehensweise ermöglicht einerseits die Nutzung dieser ermittelten Abweichungen für eine genauere Berechnung des Korrekturfaktors K, andererseits können die auf den einzelnen Fertigungsstufen ermittelten Dimensionsabweichungen auch dazu genutzt werden, um Änderungen der Prozessparameter in den jeweils davor oder danach liegenden Prozessschritten vorzunehmen. Dazu werden die ermittelten Abweichungen und berechneten Korrekturfaktoren vorzugsweise in einer Steuereinrichtung oder auf einem Datenträger für die spätere Wiederverwendung gespeichert.

Ziel ist es, einen Korrekturfaktor K zu ermitteln, der eine hohe Genauigkeit aufweist und möglichst alle Dimensionsänderungen des Strukturgebers und insbesondere des Trägermaterials auf allen Verfahrensstufen berücksichtigt. Dabei hat es sich als vorteilhaft erwiesen, für jede Verfahrensstufe, auf der Dimensionsänderungen insbesondere des Trägermaterials auftreten können, Teilkorrekturfaktoren $k$ zu ermitteln.

In einer Ausführungsform des erfindungsgemäßen Verfahrens werden deshalb Abweichungen in der Länge und/oder der Breite des Trägermaterials von der Länge und/oder der Breite des Strukturgebers nach Aufbringen des Druckdekors auf das Trägermaterial gemessen. Anhand dieser gemessenen Dimensionsänderungen wird ein Teilkorrekturfaktor $k_a$ ermittelt.

In einer weiteren Ausführungsform des erfindungsgemäßen Verfahrens werden Abweichungen in der Länge und/oder der Breite des Trägermaterials von der Länge und/oder der Breite des Strukturgebers nach Trocknung des Dekordrucks gemessen. Anhand der gemessenen Dimensionsänderungen auf dieser Verfahrensstufe wird ein Teilkorrekturfaktor $k_b$ ermittelt.

In einer weiteren Ausführungsform des erfindungsgemäßen Verfahrens werden Abweichungen in der Länge und/oder der Breite des Trägermaterials von der Länge und/oder der Breite des Strukturgebers nach dem Aufbringen und Trocknen der Imprägnierung auf das bedruckte Trägermaterial gemessen. Anhand der gemessenen Dimensionsänderungen auf dieser Verfahrensstufe wird ein Teilkorrekturfaktor $k_c$ ermittelt. Nach dem Aufbringen des Imprägnierharzes und Trocknen der Imprägnierung wird das Trägermaterial abgekühlt. Das Abkühlen erfolgt üblicherweise an einer Kühlwalze. Vorzugsweise erfolgt die Ermittlung des Korrekturfaktors $k_c$ an den Kühlwalzen. An dieser Stelle ist sowohl die Längen- als auch die Breitenmessung sehr exakt möglich, da imprägnierte Trägermaterial vollflächig an die Kühlwalzen angepresst ist. Damit wird das häufig existierende Problem von welligen Imprägnaten, die eine exakte Längen- und Breitenmessung erschweren umgangen. Zudem ist es möglich, mit dem erfindungsgemäßen Verfahren Schichtstoffe kontinuierlich in Bahnform zu produzieren. Erstmals kann registered embossing auch für Rollenware über große Längen hinweg sichergestellt werden. Ein Clippen (Schneiden) in kleinere Formate ist nicht mehr nötig. Rollen können im weiteren Prozess zudem variabler verarbeitet werden als Bogenware.

In einer weiteren Ausführungsform des erfindungsgemäßen Verfahrens werden Abweichungen in der Länge und/oder der Breite des Trägermaterials von der Länge und/oder der Breite des Strukturgebers nach dem Durchlaufen eines oder mehrerer weiterer Verfahrensschritte gemessen. Anhand der Dimensionsänderungen in diesem einen oder diesen weiteren Verfahrensschritten können weitere Teilkorrekturfaktoren ermittelt werden. Weitere Verfahrensschritte, an denen Abweichungen in der Länge und/oder der Breite des Trägermaterials von der Länge und/oder der Breite des Strukturgebers auftreten können, sind beispielsweise das Aufbringen einer Schutzschicht auf das Trägermaterial oder das Pressen des Schichtstoffs zur Ausbildung eines Laminats unter Einfluss eines hohen Drucks und einer hohen Temperatur, entweder in einer kontinuierlichen Presse (CPL-Presse) oder einer Mehretagenpresse.

Eine Schutzschicht ist beispielsweise eine Schutzfolie, die den Schichtstoff vor Beschädigungen in nachfolgenden Verarbeitungsschritten, wie beispielsweise beim Aufbringen des Schichtstoffs auf eine Holzwerkstoffplatte und dem Zuschneiden der Holzwerkstoffplatte, schützt.

Der Druck in der kontinuierlichen Presse liegt in geeigneter Weise im Bereich von 5 bis 90 bar, vorzugsweise im Bereich von 15 bis 70 bar. Die Temperatur liegt typischerweise im Bereich von 140 bis 260 °C, vorzugsweise im Bereich von 160 bis 200 °C.

In einer weiteren Ausführungsform des erfindungsgemäßen Verfahrens werden beispielsweise Abweichungen in der Länge und/oder der Breite des Trägermaterials von der Länge und/oder der Breite des Strukturgebers nach dem Pressvorgang gemessen. Dabei wird ein daraus resultierender Teilkorrekturfaktor $k_d$ ermittelt

In einer besonders bevorzugten Ausführungsform des erfindungsgemäßen Verfahrens erfolgt die Berechnung des Korrekturfaktors K anhand der Formel (I):

$$K = k_a + k_b + k_c + k_d \quad (I),$$

wobei

$k_a$, $k_b$, und $k_c$ wie oben beschreiben definiert sind; $k_d$ vorhanden oder nicht vorhanden sein kann, und falls vorhanden, den Teilkorrekturfaktor resultierend aus einem oder mehreren weiteren Prozessschritten, beispielsweise aus dem Pressvorgang darstellt; und $k_a$, $k_b$, $k_c$ und $k_d$ jeweils unabhängig voneinander 0 oder eine positive oder negative Zahl in Prozent darstellen können.

Wenn einer oder mehrere der Teilkorrekturfaktoren $k_a$, $k_b$, $k_c$, $k_d$ 0 (null) sind, so waren nach Durchlaufen der jeweiligen Verfahrensstufe(n) keine Dimensionsänderungen des Trägermaterials messbar.

Wenn einer oder mehrere der Teilkorrekturfaktoren $k_a$, $k_b$, $k_c$, $k_d$ eine negative Zahl darstellen, so waren nach Durchlaufen der jeweiligen Verfahrensstufe(n) Schrumpfungen des Trägermaterials messbar.

Wenn einer oder mehrere der Teilkorrekturfaktoren, $k_a$, $k_b$, $k_c$, $k_d$ eine positive Zahl darstellen, sind, so waren nach Durchlaufen der jeweiligen Verfahrensstufe(n) Dehnungen des Trägermaterials messbar.

Entsprechend erfolgt ein Komprimieren der Dimensionen des Dekors im Digitaldruck um den Betrag von Korrekturfaktor K in %, wenn der Korrekturfaktor K eine positive Zahl darstellt. Andernfalls, wenn K eine negative Zahl darstellt, erfolgt eine Expansion des Dekors im Digitaldruck um den Betrag von K in %

In einer weiteren besonders bevorzugten Ausführungsform des erfindungsgemäßen Verfahrens erfolgt die Berechnung der Teilkorrekturfaktoren unabhängig voneinander anhand der Formel (II):

$$k_x = \left(\frac{D2}{D1} * 100\%\right) - 100\% \quad (II)$$

wobei

$k_x$   einen Teilkorrekturfaktor ausgewählt aus $k_a$, $k_b$, $k_c$, und $k_d$;

D2   die Länge oder Breite des Trägermaterials nach Durchlaufen des jeweiligen Prozessschritts a) i. bis a) iv; und

D1   die Länge oder Breite des Strukturgebers

darstellt und D1 und D2 beide die Länge Trägermaterials und Strukturgebers oder beide die Breite des Trägermaterials und Strukturgebers darstellen.

Die jeweiligen Teilkorrekturfaktoren können jeweils für die Änderung der Länge oder die Änderung der Breite des Trägermaterials nach Durchlaufen der jeweiligen Verfahrensstufe berechnet werden. Dadurch wird ermöglicht, dass der Korrekturfaktor K separat für die Längenänderung oder die Breitenänderung des Trägermaterials berechnet werden kann. Vorzugsweise stellt die Erfindung also einen Korrekturfaktor $K_L$ für die Längenänderung und einen Korrekturfaktor $K_B$ für die Breitenänderung des Trägermaterials bereit, wobei $K_L$ und $K_B$ anhand der Formeln (I) und (II) berechnet werden.

Es ist nunmehr möglich, die Dimensionen des Druckdekors im Digitaldruck mittels des Korrekturfaktors K, vorzugsweise des Korrekturfaktors $K_L$ in der Länge und/oder des Korrekturfaktors $K_B$ in der Breite zu komprimieren oder zu expandieren. Die Berechnung separater Korrekturfaktoren $K_L$ für die Längenänderung und $K_B$ für die Breitenänderung des Trägermaterials ist von besonderem Vorteil, da der Nutzer des erfindungsgemäßen Verfahrens alle Möglichkeiten zur Anpassung der Dimensionen des Druckdekors hat: Die Länge oder die Breite des Druckdekors können separat voneinander angepasst, das heißt expandiert oder komprimiert werden. Die Länge oder die Breite des Druckdekors können auch gleichzeitig angepasst werden, wobei eine Dimension des Druckdekors, beispielsweise die Länge, komprimiert werden kann, und die andere Dimension des Druckdekors, beispielsweise die Breite, ebenfalls komprimiert oder aber auch expandiert werden kann.

Mit dieser Vorgehensweise ist es möglich, Schichtstoffe mit Synchronpore höchster Qualität herzustellen und dabei das geforderte Qualitätsniveau von Übereinstimmung von Struktur und Dekor (registered embossing) sicherzustellen.

Wie oben erwähnt, bietet das erfindungsgemäße Verfahren auch die Möglichkeit, die ermittelten Teilkorrekturfaktoren bei Abweichungen in den Dimensionen des Trägermaterials von den Dimensionen des Strukturgebers in einem oder mehreren Prozessschritten dazu zu nutzen, Prozessparameter zu steuern und dadurch die ermittelten Abweichungen in den Dimensionen des Trägermaterials in davor oder danach liegenden Prozessschritten auszugleichen. Prozessparameter, die gesteuert werden können, sind beispielsweise Temperatur, Dauer und Intensität der Trocknung des Dekordrucks bzw. des Trägermaterials nach der Imprägnierung; die Bahnspannung während des gesamten Prozesses, die Produktionsgeschwindigkeit, sowie Pressdruck und Presstemperatur der Presseinrichtung.

Eine verstärkte Trocknung des Dekordrucks bzw. des Trägermaterials nach der Imprägnierung führt zu einer stärkeren Komprimierung des Trägermaterials und kann beispielsweise dazu genutzt werden, eine nach dem Dekordruck auftretende ungewöhnlich hohe Ausdehnung des Trägermaterials auszugleichen.

Die Erhöhung der Bahnspannung führt zu einer gezielten Dehnung des Trägermaterials in Längsrichtung und kann beispielsweise dazu genutzt werden, eine ungewöhnlich hohe Komprimierung des Trägermaterials in den zuvor beschriebenen Trocknungsschritten auszugleichen usw. Weitere Steuerungsmöglichkeiten, die sich an dieser Stelle aus dem erfindungsgemäßen Verfahren ergeben, sind dem Fachmann geläufig.

Vorzugsweise erfolgt die Herstellung des Schichtstoffes in Form eines Laminats, besonders bevorzugt eines Hochdrucklaminats, in einem kontinuierlichen Verfahren in einer kontinuierlichen Presse (CPL-Presse). Das erfindungsgemäße Verfahren kann prinzipiell auch diskontinuierlich angewendet werden. Die Herstellung des Schichtstoffs als Laminat, besonders bevorzugt als Hochdruck-Laminat, erfolgt dann in einer Mehrschichtpresse Wie oben beschrieben, werden der Strukturgeber und das Trägermaterial mit Positionsmarken versehen. In einer Ausführungsform der Erfindung können die Positionsmarken dazu genutzt werden, die Positionierung des Druckdekors zum Strukturgeber in der Presse in korrekter Art und Weise vorzunehmen.

Mithilfe der Positionsmarken ist es auch möglich, das Traversieren des Dekorpapiers oder des Schichtstoffs während des Herstellungsverfahrens zu korrigieren Dazu erfolgt vorzugsweise ein permanenter Abgleich der Positionsmarken des Strukturgebers und des bedruckten Trägermaterials.

Nach dem Pressvorgang in der CPL-Presse kann das bedruckte und ggf. mit einem Overlay versehene Trägermaterial aufgerollt und in dieser Form für die weitere Nutzungen bereitgestellt werden. Alternativ kann das bedruckte und ggf. mit einem Overlay versehene Trägermaterial mittels einer Zuschnitteinrichtung in kleinere Formate überführt werden. Die Positionierung des Trägermaterials zur Erzeugung kleinerer Formate in der Zuschnitteinrichtung, insbesondere die Positionierung des Clippers, wird vorzugsweise anhand einer auf der Rückseite des Trägermaterials angebrachten Positionsmarke vorgenommen. Dabei handelt es sich in einer besonders bevorzugten Ausführungsform um den Cutblock.

In einem weiteren Aspekt betrifft die Erfindung einen Schichtstoff, insbesondere ein Hochdrucklaminat, das mit dem erfindungsgemäßen Verfahren, vorzugsweise mit dem kontinuierlichen Verfahren herstellbar ist. Das erfindungsgemäße Hochdrucklaminat weist die Schichten wie herkömmliche Hochdrucklaminate auf:

ein oder mehrere imprägnierte Kernlagen, beispielsweise 1 bis 6 Kernlagen;
ein imprägniertes und bedrucktes Trägermaterial, beispielsweise ein Dekorpapier;
gegebenenfalls ein Overlay; und
gegebenenfalls eine Schutzschicht.

Das mit dem erfindungsgemäßen Verfahren hergestellt Hochdrucklaminat unterscheidet sich jedoch von herkömmlichen Produkten, insbesondere wenn es im kontinuierlichen Verfahren hergestellt wurde, dadurch dass es eine Synchronpore, vorzugsweise mit wesentlich verbesserter Qualität, d.h. mit verbesserter Übereinstimmung von Dekor und Struktur, aufweist.

In einem weiteren Aspekt betrifft die Erfindung Holzwerkstoffplatten, die mit dem Schichtstoff, insbesondere dem Hochdrucklaminat, hergestellt nach dem erfindungsgemäßen Verfahren, ausgestattet sind. Solche Holzwerkstoffplatten sind beispielsweise ausgewählt aus funktionalisierten MDF-Platten, HDF-Platten, Möbelplatten, Fronten von Möbeln, Arbeitsplatten, Türfronten, Bodenbeläge usw.

Die Erfindung stellt weiterhin eine Vorrichtung zur, vorzugsweise kontinuierlichen, Erzeugung von Schichtstoffen mit Synchronpore bereit. Die erfindungsgemäße Vorrichtung umfasst in einer Ausführungsform mindestens eine Druckstraße mit mindestens einem Digitaldrucker zum Erstellen eines Druckdekors auf einem Trägermaterial. Die erfindungsgemäße Vorrichtung umfasst weiterhin mindestens ein Mittel zum Trocknen des Trägermaterials nach dem Digitaldruck. Die Trocknung erfolgt üblicherweise in einem Trockenkanal mittels warmer Luft, IR-Strahlern o.ä. Zur Herstellung des Laminats, insbesondere des Hochdrucklaminats, umfasst die erfindungsgemäße Vorrichtung eine Presse, vorzugsweise eine CPL-Presse, für die kontinuierliche Laminierung, oder alternativ eine Mehretagenpresse für die Verarbeitung kleinerer Formate im diskontinuierlichen Verfahren.

Das Trägermaterial wird nach erfolgter Trocknung des Druckdekors, das mit dem Digitaldrucker aufgebracht worden ist, imprägniert. Zum Imprägnierung des Trägermaterials wird üblicherweise ein Melamin-Formaldehyd-Harz verwendet. Die erfindungsgemäße Vorrichtung umfasst deshalb auch mindestens ein Mittel zum Imprägnieren des Trägermaterials und mindestens ein Mittel zum Trocknen des Trägermaterials nach dem Aufbringen der Imprägnierung.

Das Trocknen des Trägermaterials nach dem Aufbringen der Imprägnierung wird bei erhöhter Temperatur, beispielsweise in einem Trockenkanal mittels warmer Luft und/oder mittels IR-Strahler durchgeführt. Für die Weiterverarbeitung, insbesondere im kontinuierlichen Verfahren, ist es notwendig, dass imprägnierte und getrocknete Trägermaterial abzukühlen. Dazu kann die erfindungsgemäße Vorrichtung ein Mittel zum Abkühlen des Trägermaterials enthalten. Im einfachsten Fall ist das Mittel zum Abkühlen des Trägermaterials eine Kühlwalze, über die das imprägnierte Trägermaterial hinweg geführt wird.

Damit ein Schichtstoff mit mehreren Schichten hergestellt werden kann, umfasst die erfindungsgemäße Vorrichtung entsprechende Mittel zum Zuführen eines bedruckten Trägermaterials, mindestens einer imprägnierten Kernlage, optional eines Strukturgebers, gegebenenfalls eines imprägnierten Overlays und gegebenenfalls eines Materials zur Erzeugung einer Schutzschicht, zu der Presse.

Bei dem Overlay kann es sich um ein mit Melaminharz imprägniertes Material handeln, das optional mit abriebfesten Partikeln ausgestattet ist. Die abriebfesten Partikel sind bevorzugt ausgewählt aus der Gruppe enthaltend Aluminiumoxide, Korund, Borcabide, Siliciumdioxide, Siliciumcarbide und Glaskugeln.

Schichtstoffe, die mit der erfindungsgemäßen Vorrichtung bzw. dem erfindungsgemäßen Verfahren hergestellt werden können, enthalten eine oder mehrere imprägniert Kernlagen. Als Kernlagen werden in der Regel Natronkraftpapiere eingesetzt, die mit einem wärmehärtbaren Harz ausgestattet sind. Je nach gewünschter Anzahl der Kernlagen ist die erfindungsgemäße Vorrichtung mit der korrespondierenden Anzahl von Zuführungseinrichtungen für die Kernlagen ausgerüstet. In einer Ausführungsform kann die erfindungsgemäße Vorrichtung 1 bis 6 Zuführungseinrichtungen für Kernlagen enthalten.

Als Strukturgeber wird entweder ein mit einer Struktur versehenes Band der kontinuierlichen Presse (CPL-Presse) verwendet. Alternativ wird ein Strukturgeber auf Basis eines lackierten Papiers verwendet und während des kontinuierlichen Pressvorgangs zugeführt. Für diesen Fall ist die erfindungsgemäße Vorrichtung mit einer Zuführungsvorrichtung für den Strukturgeber auf Papierbasis ausgestattet.

Die erfindungsgemäße Vorrichtung enthält weiterhin mindestens ein Mittel zum Messen der Dimensionen des Strukturgebers und mindestens ein Mittel zum Messen der Dimensionsänderungen des Trägermaterials. Ein oder mehrere Messmittel können nach dem Digitaldrucker, nach dem Mittel zum Trocknen des Drucks, nach dem Mittel zum Imprägnieren und Trocknen des Trägermaterials, wie beispielsweise an der Kühlwalze, und nach der Presse angeordnet sein.

Geeignete Messmittel sind zum Beispiel Sensoren, wie Längen- und Breitensensoren, oder Kameras. Es ist auch möglich, die Dimensionen des Schichtstoffes, beispielsweise nach Austreten aus der Presse, mittels eines Scanners und der nachfolgenden Auswertung der gescannten Daten in einer Steuereinrichtung zu ermitteln.

In einer weiteren Ausführungsform enthält die erfindungsgemäße Vorrichtung mindestens eine Steuereinrichtung. Die Steuereinrichtung verwendet in vorteilhafter Weise die mit dem erfindungsgemäßen Verfahren ermittelten Teilkorrekturfaktoren und Korrekturfaktoren zur Steuerung der Prozessparameter, wie Trocknung, Bahnspannung, Produktionsgeschwindigkeit, Pressdruck und Presstemperatur und des Digitaldrucks. In einer alternativen Ausführungsform enthält die erfindungsgemäße Vorrichtung eine separate Steuereinrichtung für die Steuerung des Digitaldrucks, insbesondere für die Anpassung der Dimensionen (Komprimierung, Expandierung) des Druckdekors. Die Steuereinrichtung ist beispielsweise ein Computer, Prozessrechner oder ähnliches.

Je nach gewünschter Konfektionierung des hergestellten Schichtstoffs enthält die erfindungsgemäße Vorrichtung in einer weiteren Ausführungsform ein Mittel zum Aufrollen des in einem kontinuierlichen Verfahren hergestellten Schichtstoffs. Alternativ oder zusätzlich kann die erfindungsgemäße Vorrichtung eine Zuschnitteinrichtung zur Erzeugung kleinerer Formate aufweisen.

Die erfindungsgemäße Vorrichtung ist besonders vorteilhaft, da durch Qualitätsverbesserung bei der Herstellung der Synchronpore wesentlich weniger Ausschuss produziert wird und die Weiterverarbeitung der Schichtstoffe erleichtert bzw. verbessert wird.

Die Erfindung wird nachfolgend anhand eines Ausführungsbeispiels näher erläutert:

**Ausführungsbeispiel 1**

Ein Strukturgeber, der mit einer Holzstruktur für registered embossing versehen war, wurde zunächst bezüglich des Längen- und Breitenrapports vermessen. Dies erfolgte, nachdem der Strukturgeber einmal durch eine aufgeheizte CPL-Presse (ca. 200°C) durchgefahren worden war. Die Vermessung erfolgte mit Hilfe von Markierungen, die auf dem Strukturgeber angebracht worden waren. Im zweiten Schritt wurde ein digital bedrucktes Dekorpapier, das für den Strukturgeber ausgewählt worden war, auf einer Imprägnieranlage imprägniert. Es handelte sich bei dem Dekorpapier um ein weißes Papier in einer Grammatur von 80 g/m². Dabei wurde bereits beim Digitaldruck von einem Breitenwachstum von 1,4% und einem Längenwachstum von 0,5 % ausgegangen, d. h. das Dekor wurde beim Digitaldruck um die entsprechenden Prozentsätze komprimiert. Beim Druck des Papiers waren die Druck- bzw. Positionsdaten gespeichert worden. Bei der Prüfung der Dimensionsänderung des Papiers an der Detektionsvorrichtung des Imprägnierkanals über die gespeicherten Dekor- bzw. Positionsdaten zeigte sich, dass das Breitenwachstum bei 1,6% und bei einem Längenwachstum von 0,5% lag. In einem weiteren Druckversuch wurde der Digitaldruck in der Breite um +0,2% komprimiert. Das Papier wurde wiederum imprägniert und am Detektor vermessen. Dabei zeigte sich, dass das Längen- und Breitenwachstum tatsächlich im angestrebten Bereich lag. Daraufhin wurde das imprägnierte Papier an der CPL-Presse verarbeitet. Auch hier wurden die Dekor- bzw. Positionsdaten genutzt, um die Synchronisierung von Dekor und Strukturgeber zu erreichen. Nach dem Durchfahren des imprägnierten Dekorpapiers zusammen mit imprägnierten Kernlagen ( Natronkraftpapier ) und einem imprägnierten Overlay wurde am Detektor hinter der CPL-Presse eine Übereinstimmung von Dekormaserung und Struktur des Strukturgebers festgestellt.

**Patentansprüche**

1. Verfahren zur Erzeugung von Schichtstoffen mit Synchronpore, umfassend die Schritte:

   a) Erzeugung eines Schichtstoffs, umfassend die Schritte

      i. Bedrucken eines Trägermaterials, vorzugsweise eines Dekorpapiers, mittels Digitaldruck und Speichern der Druck- und/oder Positionsdaten des Druckdekors;
      ii. Trocknen des bedruckten Trägermaterials;
      iii. Aufbringen und Trocknen einer Imprägnierung auf das bedruckte Trägermaterial;
      iv. Erzeugen eines Schichtstoffs, umfassend das Pressen des bedruckten und imprägnierten Trägermaterials zusammen mit imprägnierten Kernlagen und ggf. einem Overlay und ggf. einer Schutzschicht unter Verwendung eines Strukturgebers, wobei der Strukturgeber ein Strukturgeber auf Papierbasis oder ein Strukturband ist;

   b) Messen der Dimensionen des Strukturgebers mit Hilfe des Längen- und/oder Breitenrapports oder mit Hilfe von Positionsmarken die auf dem Strukturgeber aufgebracht sind, wobei die Dimensionen des Strukturgebers nach mindestens einmaligem Durchlaufen des Strukturgebers durch eine aufgeheizte Presse gemessen wird;
   c) Messen der Dimensionen des Trägermaterials mit Hilfe des Längen- und/oder Breitenrapports oder mit Hilfe von Positionsmarken die auf dem Druckdekor aufgebracht sind;
   d) Ermittlung von Abweichungen der Dimensionen des Trägermaterials von den Dimensionen des Strukturgebers;
   e) Messen der Abweichungen in der Länge und/oder der Breite des Trägermaterials von der Länge und/oder der Breite des Strukturgebers nach Aufbringen des Druckdekors auf das Trägermaterial und ermitteln eines Teilkorrekturfaktors $k_a$ anhand dieser Dimensionsänderungen;

   und/oder

   Messen der Abweichungen in der Länge und/oder der Breite des Trägermaterials von der Länge und/oder der Breite des Strukturgebers nach Trocknung des Dekordrucks und ermitteln eines Teilkorrekturfaktors $k_b$;
und/oder
Messen der Abweichungen in der Länge und/oder der Breite des Trägermaterials von der Länge und/oder der Breite des Strukturgebers nach dem Aufbringen und Trocknen der Imprägnierung auf das bedruckte Trägermaterial und ermitteln eines Teilkorrekturfaktors $k_c$;

wobei die Teilkorrekturfaktoren unabhängig voneinander nach Formel (II) berechnet werden:

$$k_x = \left(\frac{D2}{D1} * 100\%\right) - 100\% \text{ (II)}$$

wobei

$k_x$ einen Teilkorrekturfaktor ausgewählt aus $k_a$, $k_b$, $k_c$, und $k_d$;
D2 die Länge oder Breite des Trägermaterials nach Durchlaufen des jeweiligen Prozessschritts a) i. bis a) iv; und
D1 die Länge oder Breite des Strukturgebers

darstellt und D1 und D2 beide die Länge des Trägermaterials und Strukturgebers oder beide die Breite des Trägermaterials und Strukturgebers darstellen;
f) Anpassen der Dimensionen des Druckdekors beim Digitaldruck anhand der ermittelten Teilkorrekturfaktoren $k_x$ und Steuern von einem oder mehreren Prozessparametern anhand der ermittelten Teilkorrekturfaktoren, um die ermittelten Abweichungen in den Dimensionen des Trägermaterials in davor oder danach liegenden Prozessschritten auszugleichen.

2. Verfahren nach Anspruch 1, wobei der Schichtstoff ein Hochdrucklaminat ist.

3. Verfahren nach einem der vorangegangenen Ansprüche, **dadurch gekennzeichnet, dass** wenn im Verfahrensschritt e) die Abweichungen in der Länge und/oder der Breite des Trägermaterials von der Länge und/oder der Breite des Strukturgebers nach dem Aufbringen und Trocknen der Imprägnierung auf das bedruckte Trägermaterial gemessen wird und ein Teilkorrekturfaktor $k_c$, ermittelt wird, die Längen und/oder Breitenmessung des Trägermaterials an den Kühlwalzen erfolgt.

4. Verfahren nach einem der vorherigen Ansprüche, **dadurch gekennzeichnet, dass** in Verfahrensschritt d) Abweichungen in der Länge und/oder der Breite des Trägermaterials von der Länge und/oder der Breite des Strukturgebers ermittelt werden.

5. Verfahren nach einem der vorherigen Ansprüche, **dadurch gekennzeichnet, dass** auf allen Fertigungsstufen a) i. bis a) iv. Abweichungen in der Länge und/oder der Breite des Trägermaterials von der Länge und/oder der Breite des Strukturgebers gemäß Verfahrensschritt d) ermittelt werden.

6. Verfahren nach einem der vorherigen Ansprüche, **dadurch gekennzeichnet, dass** Abweichungen in der Länge und/oder der Breite des Trägermaterials von der Länge und/oder der Breite des Strukturgebers nach dem Pressvorgang gemessen werden und ein daraus resultierender Teilkorrekturfaktor $k_d$ ermittelt wird.

7. Verfahren nach einem der vorherigen Ansprüche, **dadurch gekennzeichnet, dass** Abweichungen in den Dimensionen des Trägermaterials durch Steuerung der Prozessparameter, wie Trocknung, Bahnspannung, Produktionsgeschwindigkeit, Pressdruck und Presstemperatur ausgeglichen werden.

8. Verfahren nach einem der vorherigen Ansprüche, **dadurch gekennzeichnet, dass** die Herstellung des Schichtstoffs kontinuierlich in einer kontinuierlichen Presse (CPL-Presse) erfolgt.

9. Verfahren nach einem der vorhergehenden Ansprüche, **dadurch gekennzeichnet, dass** das bedruckte und ggf. mit einem Overlay versehene Trägermaterial mittels einer Zuschnitteinrichtung in kleinere Formate überführt wird, und dadurch, dass die Positionierung der Trägermaterials zur Erzeugung kleinerer Formate in der Zuschnitteinrichtung anhand einer Positionsmarke vorgenommen wird.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004054765 A1
- WO 9731775 A